# EUROPEAN PATENT SPECIFICATION

(11) **EP 4 102 487 B1**
(45) Date of publication and mention of the grant of the patent: **29.11.2023**
(21) Application number: 21185856.8
(22) Date of filing: 15.07.2021
(51) Int. Cl.: G09B 5/06

(54) **ELECTRONIC TOY BOOK**
ELEKTRONISCHES SPIELBUCH
LIVRE JOUET ÉLECTRONIQUE

(30) Priority: 10.06.2021 CN 202110650316
(43) Date of publication of application: 14.12.2022
(73) Proprietor: Heshan Astros Printing Ltd., Heshan, Guangdong 529700 (CN); Leo Paper Bags Manufacturing (1982) Limited, Hong Kong (CN)
(72) Inventor: MAI, Jiajie, Guangdong, 529700 (CN); CAI, Ruohua, Guangdong, 529700 (CN)
(74) Representative: Colombo, Stefano Paolo

(56) References cited:
- EP-A1- 3 826 323
- CN-B- 104 415 557
- GB-A- 2 309 932
- US-A- 5 245 171
- US-A1- 2013 269 225
- US-A1- 2014 358 687

## Description

### TECHNICAL FIELD

The present invention relates to the field of toys, and more particularly, to an electronic toy book.

### BACKGROUND

Electronic toy book is an educational toy beneficial for developing a visual sense and an auditory sense of children, and is a popular product with parents and children. Children play sound or music related to reading contents by pressing a button. The electronic toy book is more interesting and interactive than a traditional reading material, and breaks a traditional learning and entertainment mode. However, playing music by simply pressing the button is monotonous in form, so that the electronic book is too single in function, and it is difficult to improve an interestingness and an interactivity.

US2013269225A1 describes greeting cards with moving elements or devices which are operable to create motion in connection with some portion of the greeting card. The greeting card may include a multi-panel greeting card body or a three-dimensional foam greeting card body. At least one movable object is contained upon or within the greeting card body. A sound module having at least one pre-recorded digital audio file saved therein and a motor module are contained and concealed within the greeting card body. One or more switches may be used to activate the sound and motor modules, causing the pre-recorded audio file to play and causing movement of the movable or mobile object. This movement may be up-and-down or "bouncing" motion, spinning or rotational motion, side-to-side motion or any other reciprocating motion.

US5245171A discloses a mailing piece comprising the usual envelope enclosing a legible text. To induce the recipient to open the envelope and read the text, the envelope has a window (18) at which there is a manually operable actuator for a device which generates an audible message.

EP3826323A1 discloses a push-pull style interactive audiobook, including a body, a push-pull member, a speaker arranged in the body, a controller storing audio file, and a trigger switch circuit; wherein, both the speaker and the trigger switch circuit are connected to the controller; the body comprises a track slot, and the push-pull member comprises a trigger, wherein, the controller is configured to output the audio file to the speaker for playing in response to the switch-on of the trigger switch circuit caused by the trigger during movement along the track slot of the push-pull member. The push-pull interactive audiobook is more interesting and interactive, thus motivating children's interest in learning.

### SUMMARY

The present invention aims to solve at least one of the technical problems in the existing technology by providing an electronic toy book.

The technical solutions used in the present invention to solve the problems are as follows.

An electronic toy book includes:
a book body, wherein the book body has a folded state and an unfolded state, wherein the book body comprises a first page and a second page which are movably connected with each other; when the book body is in the folded state, the first page and the second page are folded; and when the book body is in the unfolded state, the first page and the second page are unfolded;
a motion response unit, wherein the motion response unit is arranged in the book body, the motion response unit includes a response switch and a response device, and the response switch is electrically connected with the response device; and
a triggering unit, wherein the triggering unit is arranged in the book body, and the triggering unit is configured for triggering the response switch when the book body is changed from the folded state to the unfolded state, so that the response device is operated; the response switch is arranged on a first path of the second page; the triggering unit is a first flexible member having a first end provided with a conductive member, a second end of the first flexible member far away from the conductive member is connected with the first page , and the first end is arranged on the second page; and the first path is a path along which the first end moves as the book body is changed from the folded state to the unfolded state;
when the book body is changed from the folded state to the unfolded state, the first page rotates relative to the second page, the first page drives the first flexible member to move, the first end moves along the first path, and the conductive member is contacted with the response switch during this period, so that the response switch is closed, and the response device is controlled to be operated.

Further, the response switch is an open printed circuit.

Further, the first page is rotationally connected with the second page.

Further, the response device is a control circuit for controlling a light source, a sound source or a motor to be operated.

The above electronic toy book at least has the following beneficial effects: before use, the book body is in the folded state, the triggering unit does not trigger the response switch, and the response device is not operated. When in use, the book body in the folded state is unfolded to be in the unfolded state, at the moment, the triggering unit moves relative to the response switch and triggers the response switch, so that the response device is operated. When a reader reads contents in the book body, the response device is operated to help the reader to read, or attract the reader to read, thus improving a reading interest of the reader. Alternatively, the response device is operated to attract a user to play the electronic toy book, thus improving an interestingness of the electronic toy book.

The additional aspects and advantages of the present invention will be given in part in the following description, and will become apparent in part from the following description, or will be learned through the practice of the present invention.

### BRIEF DESCRIPTION OF DRAWINGS

The present invention is further described hereinafter with reference to the accompanying drawings and the embodiments.
FIG. 1 is a structure diagram of an electronic toy book according to an embodiment of the present invention;
FIG. 2 is another structure diagram of the electronic toy book according to an embodiment of the present invention;
FIG. 3 is another structure diagram of an electronic toy book;
FIG. 4 is another structure diagram of an electronic toy book;
FIG. 5 is another structure diagram of an electronic toy book.

### DETAILED DESCRIPTION

This part will describe the specific embodiments of the present invention in detail, and the preferred embodiments of the present invention are shown in the accompanying drawings. The accompanying drawings are used to supplement the written description with graphs, so that people can intuitively and vividly understand each technical feature and the overall technical solution of the present invention, but the accompanying drawings cannot be understood as limiting the scope of protection of the present invention.

In the description of the present invention, it should be understood that, descriptions relating to orientation, for example, orientation or positional relationships indicated by "up", "down", "front", "back", "left", "right", etc. are based on the orientation or positional relationships shown in the accompanying drawings, and are to facilitate the description of the present invention and simplify the description only, rather than indicating or implying that the device or element referred to must have a specific orientation or be constructed and operated in a specific orientation, and therefore cannot be construed as limiting the present invention.

In the description of the present invention, the meaning of "several" is one or more, the meaning of "a plurality of" is two or more, "greater than", "less than", "more than", etc. are to be understood to exclude the given figure, and "above", "below", "within", etc. are understood to include the given figure. If "first" and "second", etc. are referred to, it is only for the purpose of distinguishing technical features, and shall not be understood as indicating or implying relative importance or implying the number of the indicated technical features or implying the sequence of the indicated technical features.

In the description of the present invention, unless otherwise explicitly defined, the words such as "set", "install", and "connect" should be understood in a broad sense, and those skilled in the art can determine the specific meanings of the above words in the present invention in a rational way in combination with the specific contents of the technical solutions.

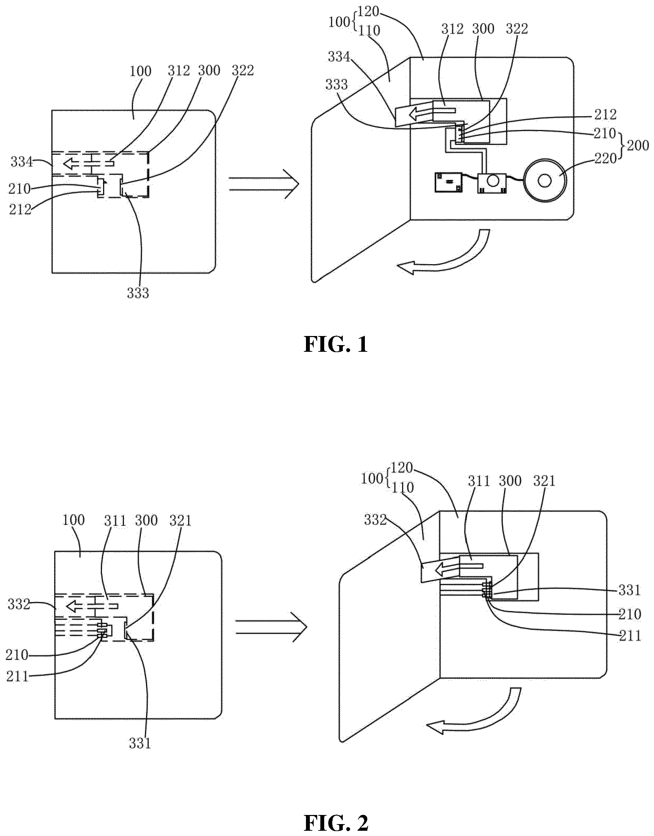

With reference to FIG. 1, an embodiment of the present invention provides an electronic toy book. The electronic toy book includes a book body 100, a motion response unit 200, and a triggering unit 300.

The book body 100 has a folded state and an unfolded state. The motion response unit 200 is arranged in the book body 100, the motion response unit 200 includes a response switch 210 and a response device 220, and the response switch 210 is electrically connected with the response device 220. The triggering unit 300 is arranged in the book body 100, and the triggering unit 300 is configured for triggering the response switch 210 when the book body 100 is changed from the folded state to the unfolded state, so that the response device 220 is operated.

In the embodiment, before use, the book body 100 is in the folded state, the triggering unit 300 does not trigger the response switch 210, and the response device 220 is not operated. When in use, the book body 100 in the folded state is unfolded to be in the unfolded state, at the moment, the triggering unit 300 moves relative to the response switch 210 and triggers the response switch 210, so that the response device 220 is operated. When a reader reads contents in the book body 100, the response device 220 is operated to help the reader to read, or attract the reader to read, thus improving a reading interest of the reader. Alternatively, the response device 220 is operated to attract a user to play the electronic toy book, thus improving an interestingness of the electronic toy book.

Specifically, the response device 220 is a control circuit for controlling operation of a light source, a sound source, or a motor. Certainly, the response device 220 may also be other output devices such as a display screen. For example, when the response device 220 is the control circuit for controlling operation of the sound source, the response device 220 at least includes a speaker and a memory for storing a sound file.

For example, the book body 100 is also internally provided with a three-dimensional folded model. When the book body 100 is changed from the folded state to the unfolded state, the three-dimensional folded model is unfolded to form a stage and a character. Meanwhile, when the book body 100 is changed from the folded state to the unfolded state, the triggering unit 300 triggers the response switch 210, and the response device 220 is operated. A light source of the stage emits light to decorate the stage, a sound source of the stage sounds music, and the character in the stage moves in the stage with the motor.

For another example, the book body 100 has written characters, and when the reader reads the characters, voice information matched with the characters is played from the sound source, thus improving the reading interest of the reader, or helping the blind to read.

In addition, objects with a book page turning structure, such as a desk calendar, a wall calendar, a notebook, etc., should fall within the scope of protection of the present invention.

According to some embodiments of the present invention, the book body 100 includes a first page 110 and a second page 120 which are movably connected with each other. When the book body 100 is in the folded state, the first page 110 and the second page 120 are folded together, which means that one of the first page 110 and the second page 120 covers the other, which is similar to a folded state of a book or a greeting card. When the book body 100 is in the unfolded state, the first page 110 and the second page 120 are unfolded, which is similar to an unfolded state of the book or the greeting card.

Specifically, a side edge of the first page 110 is rotatably connected with a side edge of the second page 120. Certainly, in other embodiments, the side edge of the first page 110 may be connected with a flat area on a page surface of the second page 120. Actually, as long as the first page 110 and the second page 120 form the book page turning structure, it should fall within the scope of protection of the present invention.

Certainly, one book body 100 may include a plurality of first pages 110 and a plurality of second pages 120. The plurality of first pages 110 and the plurality of second pages 120 form a bound book form.

In some embodiments of the present invention, the response switch 210 is a contact switch.

With reference to FIG. 2, in some embodiments of the present invention, for the response switch 210 which is a contact switch, in one aspect, the response switch 210 is an open printed circuit 211, and the response switch 210 is arranged on a first path of the second page 120. The triggering unit 300 is a first flexible member 311 having a first end 331 provided with a conductive member 321, a second end 332 of the first flexible member 311 far away from the conductive member 321 is connected with the first page 110, and the first end 331 is inserted into the second page 120. The first path is a path along which the first end 331 moves as the book body 100 is changed from the folded state to the unfolded state.

In the embodiment, when the book body 100 is changed from the folded state to the unfolded state, the first page 110 rotates relative to the second page 120, the first page 110 drives the first flexible member 311 to move, the first end 331 moves along the first path, and the conductive member 321 is contacted with the open printed circuit 211 during this period, so that the open printed circuit 211 is closed, and the response device 220 is controlled to be operated.

Specifically, the first flexible member 311 is a paper jamming strip. The conductive member 321 is a conductive material such as a conductive adhesive or a copper foil.

It should be noted that an insertion hole far away from a joint between the first page 110 and the second page 120 is formed in the second page 120 for the first end 331 of the first flexible member 311 to be inserted in. Since the insertion hole is far away from the j oint between the first page 110 and the second page 120, when the first page 110 drives the first flexible member 311 to move, the conductive member 321 can move relative to the printed circuit 211.

With reference to FIG. 1, in some embodiments of the present invention, for the response switch 210 which is a contact switch, in the other aspect, the response switch 210 is a mechanical switch 212, and the response switch 210 is arranged on a second path of the second page 120. The triggering unit 300 is a second flexible member 312 having a third end 333 provided with a pressing member 322, a fourth end 334 of the second flexible member 312 far away from the pressing member 322 is connected with the first page 110, and the third end 333 is inserted into the second page 120. The second path is a path along which the third end 333 moves as the book body 100 is changed from the folded state to the unfolded state.

In the embodiment, when the book body 100 is changed from the folded state to the unfolded state, the first page 110 rotates relative to the second page 120, the first page 110 drives the second flexible member 312 to move, the third end 333 moves along the third path, and the pressing member 322 presses the mechanical switch 212 to contact during this period, so that the mechanical switch 212 is closed, and the response device 220 is controlled to be operated.

Specifically, the second flexible member 312 is a paper jamming strip.

An insertion hole far away from the joint between the first page 110 and the second page 120 is formed in the second page 120 for the third end 333 of the second flexible member 312 to be inserted in. Since the insertion hole is far away from the joint between the first page 110 and the second page 120, when the first page 110 drives the second flexible member to move, the pressing member 322 can move relative to the mechanical switch 212. The second page 120 is provided with an L-shaped groove, and the second flexible member 312 is L-shaped. The response switch 210 is located on one side of a protruding portion of the L-shaped groove close to the first page 110. The pressing member 322 is located on one side of a protruding portion of the second flexible member 312 close to the first page 110 and is located corresponding to a position of the response switch 210. When the book body 100 is in the folded state, the pressing member 322 is far away from the mechanical switch 212. When the book body 100 is changed from the folded state to the unfolded state, the second flexible member 312 and the pressing member 322 thereon move along the L-shaped groove, the pressing member 322 presses the mechanical switch 212 to contact, and the mechanical switch 212 is closed, so that the response device 220 is controlled to be operated.

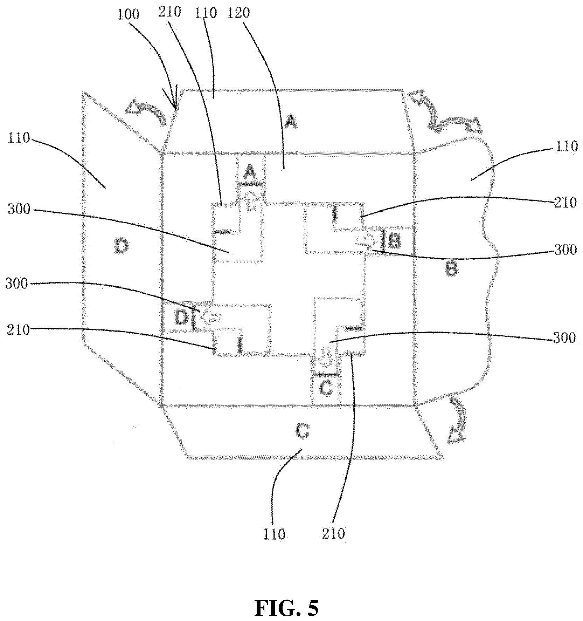

With reference to FIG. 5, in addition, each side of one second page 120 is rotatably connected with a plurality of first pages 110, each first page 110 is independently connected with one triggering unit 300, and each first page 110 can drive a corresponding triggering unit 300 to move. The second page 120 is internally provided with a plurality of motion response units 200, and each motion response unit 200 is triggered by one triggering unit 300. When one of the first pages 110 is rotated, the triggering unit 300 on the first page 110 triggers a corresponding motion response device 220. When another first page 110 is rotated, the triggering unit 300 on another first page 110 triggers a corresponding motion response device 220. That is, a plurality of motion response devices 220 may be controlled, so that the electronic toy book is more interesting.

In some embodiments, which are not within the scope of the claimed invention, the response switch 210 is a non-contact switch.

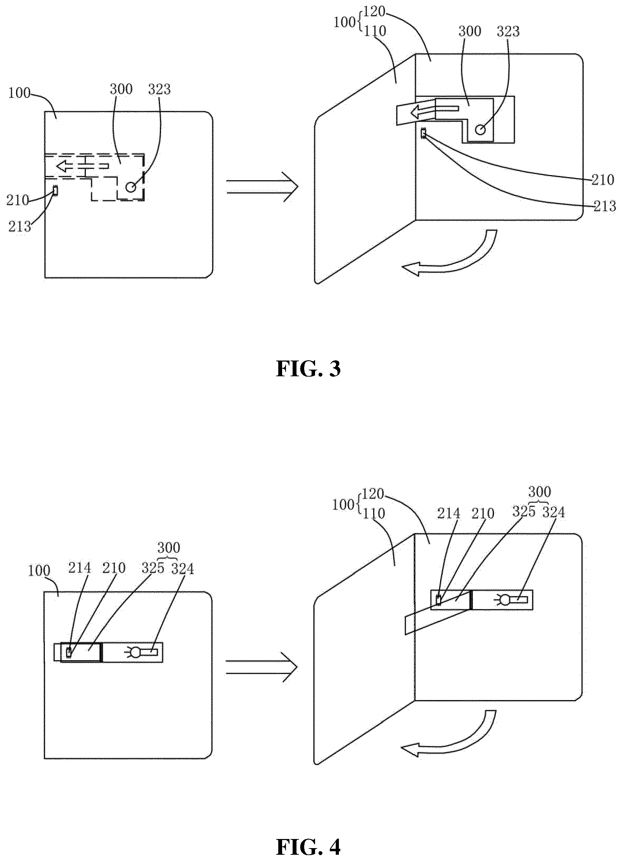

With reference to FIG. 3, in some embodiments, for the response switch 210 which is a non-contact switch, in one aspect, the response switch 210 is a Hall sensor 213, and the response switch 210 is arranged in the second page 120. The triggering unit 300 is a magnet 323. When the book body 100 is in the folded state, the magnet 323 is located outside a sensing area of the Hall sensor 213. When the book body 100 is in the unfolded state, the magnet 323 is located inside the sensing area of the Hall sensor 213.

In the embodiment, the magnet 323 may be located on a paper jamming strip, and the paper jamming strip is inserted into the second page 120. When the book body 100 is changed from the folded state to the unfolded state, the paper jamming strip and the magnet 323 thereon move relative to the Hall sensor 213 until the magnet 323 is located inside the sensing area of the Hall sensor 213, and the magnet 323 triggers the Hall sensor 213, so that the response device 220 is operated.

Certainly, the magnet 323 may also be directly placed in the first page 110. When the book body 100 is changed from the folded state to the unfolded state, the magnet 323 of the first page 110 moves relative to the Hall sensor 213 of the second page 120 until the magnet 323 is located inside the sensing area of the Hall sensor 213, and the magnet 323 triggers the Hall sensor 213, so that the response device 220 is operated. In addition, the first page 110 is provided with one magnet 323, the second page 120 is provided with a plurality of Hall sensors 213, each Hall sensor 213 controls one response device 220. In a process that the book body 100 is changed from the folded state to the unfolded state, the magnet 323 passes through sensing areas of different Hall sensors 213, so that different response devices 220 are operated.

With reference to FIG. 4, in some embodiments, for the response switch 210 which is a non-contact switch, in the other aspect, the response switch 210 is a light sensor 214, and the response switch 210 is arranged in the second page 120. The triggering unit 300 includes a luminous body 324 and a shielding member 325, the shielding member 325 is connected with the first page 110, and a light emitting direction of the luminous body 324 faces the light sensor 214. When the book body 100 is in the folded state, the shielding member 325 is located on a light path of the luminous body 324. When the book body 100 is in the unfolded state, the shielding member 325 is located outside the light path.

In the embodiment, the luminous body 324 and the light sensor 214 are located in the second page 120, and the luminous body 324 irradiates towards the light sensor 214. When the book body 100 is in the folded state, the shielding member 325 is located on the light path of the luminous body 324, the light sensor 214 cannot receive light emitted from the luminous body 324, and the light sensor 214 controls the response device 220 to stop operating. When the book body 100 is changed from the folded state to the unfolded state, the first page 110 drives the shielding member 325 to move, and the shielding member 325 leaves the light path and no longer shields the light emitted from the luminous body 324. The light sensor 214 receives the light emitted from the luminous body 324, and the light sensor 214 controls the response device 220 to be operated. It should be noted that the luminous body 324 is directly controlled by a power switch of the electronic toy book. When the power switch of the electronic toy book is turned on, the luminous body 324 emits light.

The present invention is not limited to the above embodiments. As long as it achieves the technical effect of the present invention by the same means, it should fall within the scope of protection of the present invention.

## Claims

1. An electronic toy book, comprising:
a book body (100), wherein the book body (100) has a folded state and an unfolded state, wherein the book body (100) comprises a first page (110) and a second page (120) which are movably connected with each other, when the book body (100) is in the folded state, the first page (110) and the second page (120) are folded, and when the book body (100) is in the unfolded state, the first page (110) and the second page (120) are unfolded;
a motion response unit (200), wherein the motion response unit (200) is arranged in the book body (100), the motion response unit (200) comprises a response switch (210) and a response device (220), and the response switch (210) is electrically connected with the response device (220); and
a triggering unit (300), wherein the triggering unit (300) is arranged in the book body (100), and the triggering unit (300) is configured for triggering the response switch (210) when the book body (100) is changed from the folded state to the unfolded state, so that the response device is operated;
wherein
the response switch (210) is arranged on a first path of the second page (120),
**characterised in that** the triggering unit (300) is a first flexible member (311) having a first end (331) provided with a conductive member (321), a second end (332) of the first flexible member (311) far away from the conductive member (321) is connected with the first page (110), and the first end (331) is arranged on the second page (120), and the first path is a path along which the first end (331) moves as the book body (100) is changed from the folded state to the unfolded state, when the book body (100) is changed from the folded state to the unfolded state, the first page (110) rotates relative to the second page (120), the first page (110) drives the first flexible member (311) to move, the first end (331) moves along the first path, and the conductive member (321) is contacted with the response switch (210) during this period, so that the response switch (210) is closed, and the response device (220) is controlled to be operated.

2. The electronic toy book according to claim 1, wherein the response switch (210) is an open printed circuit (211).

3. The electronic toy book according to claim 1, wherein the first page (110) is rotationally connected with the second page (120).

4. The electronic toy book according to claim 1, wherein the response device (220) is a control circuit for controlling a light source, a sound source or a motor to be operated.

## Patentansprüche

1. Ein elektronisches Spielzeugbuch, aufweisend:
einen Buchkörper (100), wobei der der Buchkörper (100) einen zusammengeklappten Zustand und einen aufgeklappten Zustand aufweist, wobei der Buchkörper (100) eine erste Seite (110) und eine zweite Seite (120) aufweist, welche beweglich miteinander verbunden sind, wobei wenn sich der Buchkörper (100) in dem zusammengeklappten Zustand befindet, die erste Seite (110) und die zweite Seite (120) zusammengeklappt sind und wenn sich der Buchkörper (100) in dem aufgeklappten Zustand befindet, die erste Seite (110) und die zweite Seite (120) aufgeklappt sind;
eine Bewegungsreaktionseinheit (200), wobei die Bewegungsreaktionseinheit (200) in dem Buchkörper (100) angeordnet ist, wobei die Bewegungsreaktionseinheit (200) einen Reaktionsschalter (210) und eine Reaktionseinrichtung (220) aufweist, und der Reaktionsschalter (210) elektrisch mit der Reaktionseinrichtung (220) verbunden ist, und
eine Auslöseeinheit (300), wobei die Auslöseeinheit (300) in dem Buchkörper (100) angeordnet ist, und die Auslöseeinheit (300) zum Auslösen des Reaktionsschalters (210) ausgebildet ist, wenn der Buchkörper (100) von dem zusammengeklappten Zustand in den aufgeklappten Zustand geändert wird, so dass die Reaktionseinrichtung betrieben wird;
wobei der Reaktionsschalter (210) auf einem ersten Pfad der zweiten Seite (120) angeordnet ist,
**dadurch gekennzeichnet, dass** die Auslöseeinheit (300) ein erstes biegsames Element (311) ist, mit einem ersten Ende (331), das mit einem leitenden Element (321) versehen ist, wobei ein zweites Ende (332) des ersten biegsamen Elements (311), weit entfernt von dem leitenden Element (321), mit der ersten Seite (110) verbunden ist, und das erste Ende (331) auf der zweiten Seite (120) angeordnet ist, und der erste Pfad ein Pfad ist, entlang dessen sich das erste Ende (331) bewegt, wenn der Buchkörper (100) von dem zusammengeklappten Zustand in den aufgeklappten Zustand geändert wird, wobei wenn der Buchkörper (100) aus dem zusammengeklappten Zustand in den aufgeklappten Zustand geändert wird, sich die erste Seite (110) relativ zu der zweiten Seite (120) dreht,
wobei die erste Seite (110) das erste biegsame Element (311) zum Bewegen treibt, wobei das erste Ende (331) sich entlang des ersten Weges bewegt und das leitende Element (321) während dieses Zeitraums mit dem Reaktionsschalter (210) in Kontakt kommt, so dass der Reaktionsschalter (210) geschlossen wird und die Reaktionseinrichtung (220) zum Betrieb gesteuert wird.

2. Elektronisches Spielzeugbuch nach Anspruch 1, wobei der Reaktionsschalter (210) eine offene gedruckte Schaltung (211) ist.

3. Elektronisches Spielzeugbuch nach Anspruch 1, wobei die erste Seite (110) mit der zweiten Seite (120) drehbar verbunden ist.

4. Elektronisches Spielzeugbuch nach Anspruch 1, wobei die Reaktionseinrichtung (220) eine Steuerschaltung zum Steuern einer Lichtquelle, einer Schallquelle oder eines zu betreibenden Motors ist.

## Revendications

1. Livre jouet électronique, comprenant :
un corps de livre (100), dans lequel le corps de livre (100) présente un état replié et un état déplié, dans lequel le corps de livre (100) comprend une première page (110) et une seconde page (120) qui sont reliées de manière mobile l'une à l'autre, et dans lequel, lorsque le corps de livre (100) se trouve dans l'état replié, la première page (110) et la seconde page (120) sont repliées, et, lorsque le corps de livre (100) se trouve dans l'état déplié, la première page (110) et la seconde page (120) sont dépliées ;
une unité de réaction à un mouvement (200), dans lequel l'unité de réaction à un mouvement (200) est prévue dans le corps de livre (100), l'unité de réaction à un mouvement (200) comprenant un commutateur de réaction (210) et un dispositif de réaction (220), et le commutateur de réaction (210) étant électriquement relié au dispositif de réaction (220) ; et
une unité de déclenchement (300), dans lequel l'unité de déclenchement (300) est prévue dans le corps de livre (100), et l'unité de déclenchement (300) est configurée pour déclencher le commutateur de réaction (210) lorsque le corps de livre (100) passe de l'état replié à l'état déplié, de sorte que le dispositif de réaction soit déclenché ;
dans lequel le commutateur de réaction (210) est prévu sur un premier trajet de la seconde page (120),
**caractérisé en ce que** l'unité de déclenchement (300) est un premier élément flexible (311) qui possède une première extrémité (331) équipée d'un élément conducteur (321), et une seconde extrémité (332) du premier élément flexible (311) éloignée de l'élément conducteur (321) reliée à la première page (110), la première extrémité (331) étant prévue sur la seconde page (120), le premier trajet étant un trajet le long duquel la première extrémité (331) se déplace lorsque le corps de livre (100) passe de l'état replié à l'état déplié, et **en ce que**, lorsque le corps de livre (100) passe de l'état replié à l'état déplié, la première page (110) pivote par rapport à la seconde page (120), la première page (110) entraîne le premier élément flexible (311) afin qu'il se déplace, la première extrémité (331) se déplace le long du premier trajet, et l'élément conducteur (321) est mis en contact avec le commutateur de réaction (210) pendant cette période, de sorte que le commutateur de réaction (210) soit fermé, et le dispositif de réaction (220) est commandé afin d'être déclenché.

2. Livre jouet électronique selon la revendication 1, dans lequel le commutateur de réaction (210) est un circuit imprimé ouvert (211).

3. Livre jouet électronique selon la revendication 1, dans lequel la première page (110) est reliée en rotation à la seconde page (120).

4. Livre jouet électronique selon la revendication 1, dans lequel le dispositif de réaction (220) est un circuit de commande destiné à contrôler une source de lumière, une source de son ou un moteur à déclencher.
